# EUROPÄISCHE PATENTSCHRIFT

(11) **EP 2 640 486 B1**
(45) Veröffentlichungstag und Bekanntmachung des Hinweises auf die Patenterteilung: **03.10.2018**
(21) Anmeldenummer: 11787661.5
(22) Anmeldetag: 16.11.2011
(51) Int. Cl.: B01D 39/20, B01D 46/52, B01D 39/12, B01D 46/10

(54) **PARTIKELABSCHEIDER MIT EINER FÜR ABGAS DURCHSTRÖMBAREN METALLISCHEN LAGE**
PARTICLE SEPARATOR COMPRISING A METAL LAYER THROUGH WHICH EXHAUST GAS CAN FLOW
SÉPARATEUR DE PARTICULES COMPORTANT UNE COUCHE MÉTALLIQUE POUVANT ÊTRE TRAVERSÉE PAR UN GAZ D'ÉCHAPPEMENT

(30) Priorität: 19.11.2010 DE 102010051730
(43) Veröffentlichungstag der Anmeldung: 25.09.2013
(73) Patentinhaber: Continental Automotive GmbH, 30165 Hannover (DE)
(72) Erfinder: SITTIG, Joachim, 53721 Siegburg (DE); VOIT, Michael, 51375 Leverkusen (DE); KURTH, Ferdi, 53894 Mechernich (DE); WIERES, Ludwig, 51491 Overath (DE)
(86) Internationale Anmeldenummer: PCT/EP2011/070223
(87) Internationale Veröffentlichungsnummer: WO 2012/066022

(56) Entgegenhaltungen:
- EP-A2- 0 764 455
- DE-A1-102006 013 709
- DE-A1-102009 010 307
- FR-A1- 2 920 821
- JP-A- 2010 151 091
- US-A- 4 169 059
- US-A1- 2003 038 088

## Beschreibung

Die vorliegende Erfindung betrifft einen Partikelabscheider zur Behandlung von Abgasen einer Verbrennungskraftmaschine, der mindestens eine für Abgas durchströmbare metallische Lage, insbesondere eine Sieblage, aufweist. Die Erfindung findet insbesondere Anwendung bei mobilen Verbrennungskraftmaschinen, wie sie bspw. bei Kraftfahrzeugen vorgesehen sind.

Das Abgas einer Verbrennungskraftmaschine enthält regelmäßig Schadstoffe und Feststoffe, die gerade unter Berücksichtigung der entsprechenden Vorschriften zum Schutz der Gesundheit und der Umwelt zu entfernen sind. Im Hinblick auf die Feststoffe wurde bereits vorgeschlagen, Bestandteile des Brennstoffes, wie z. B. Ruß oder unverbrannte Kohlenwasserstoffe, Schwefelverbindungen, etc. aus dem Abgas heraus zu filtern und dann (katalytisch und/oder thermisch und/oder chemisch) zu beseitigen bzw. umzuwandeln. Hierzu ist bekannt, Filter einzusetzen, die beispielsweise eine poröse Wand aufweisen, an bzw. in denen diese Feststoffe zurückgehalten werden.

In der US 2003/0038088 A1 wird ein Hochtemperaturflüssigkeits- oder Gasfilterelement beschrieben, welches ein gefaltetes Vlies aus Sintermetallfasern umfasst. Dieses gefaltete Vlies wird mit einem speziellen Gehäuse gehalten, welches zweiteilig eine gefaltete Aussparung formt. Mit diesem Filterelement soll die Vlieslage derart befestigt sein, dass Bypass-Strömungen trotz Vibrationen im Abgasstrang verhindert werden. Das offenbarte Hochtemperaturflüssigkeits- oder Gasfilterelement ist eingerichtet zum Herausfiltern von Partikeln, wie z. B. Rußpartikeln, die bei der Verbrennung von Kraftstoff entstehen.

In der US 4,169,059 wird eine Leckage-freie Filteranordnung für Hochtemperaturanwendungen beschrieben. Dieser Filter soll aus sehr feinen Metallfasern gefertigt werden und eine Maschenweite von 50 Maschen pro Zoll aufweisen. Dieses Filtermedium ist bevorzugt gewellt.

In der EP 0 764 455 A2 wird ein Filter zur Behandlung von kohlestoffbasierten Partikeln im Abgas und eine Vorrichtung für die genannte Behandlung mittels eines solchen Filters beschrieben. Beispielhaft wird eine mehrfach gewellte Filterlage angegeben.

In der FR 2 920 821 A1 wird ein in eine Abgasrückführleitung eingesetztes Filterelement angegeben.

Die DE 10 2009 010307 A1 offenbart eine Abgasbehandlungseinrichtung. wobei die Vorrichtung zwei nacheinander angeordnete Partikelfilter aufweist, wobei der zweite Partikelfilter eine Trageinrichtung mit einer Filtereinheit aufweist, wobei die Porengröße der Trageinrichtung größer ist als die der Filtereinheit.

Die JP 2010 151091 A zeigt eine in einer Abgasrückführung angeordnete Filtervorrichtung, mit einem mehrfach gefalteten Filterelement.

Neben diesen, aus dem verbrannten Brennstoff entstehenden Feststoffen können zusätzliche Partikel im Abgas mitgeführt werden, die einen anderen Ursprung haben und um Größenordnungen größer sind als diese Feststoffe. Verbrennungskraftmaschinen und die dazu gehörige Abgasanlage unterliegen im Betrieb oft starken Vibrationen. Hierdurch können sich Partikel, insbesondere in Form von Spänen, Stücken von Beschichtungen und Ablagerungen, Teile von Abgasbehandlungseinheiten lösen, und - mitgerissen durch den Abgasstrom - nachfolgende Bauteile durch den Impuls des Einschlages beschädigen. Zudem können diese Partikel bei bewegten Bauteilen im Abgassystem, wie insbesondere einen Turbolader bzw. Turboverdichter, durch die erhöhte Reibwirkung in Dichtspalten zu erhöhter Abrasion führen. Zudem sind Abgassysteme bekannt, die einen Teil des erzeugten Abgases wieder der Verbrennungskraftmaschine zurückführen (AGR/EGR: Abgasrückführung), so dass für diesen Fall ebenfalls die Gefahr besteht, dass die Verbrennungskraftmaschine solchen Partikeln ausgesetzt wird und dabei Schaden nimmt.

Die WO-A-2007110170 schlägt eine Anordnung zur Behandlung von Abgasen einer Verbrennungskraftmaschine vor, bei der eine Sieblage eingesetzt wird, die größer als ein Querschnitt der Abgasleitung ist. Diese Sieblage dient insbesondere als Schutz für einen in Strömungsrichtung des Abgases nachgelagerten Turbolader vor abgelösten keramischen Partikeln eines stromaufwärts positionierten Wabenkörpers.

Es hat sich nunmehr gezeigt, dass die zurückgehaltenen Partikel mit zunehmender Betriebsdauer Probleme erzeugen können. Hierbei ist zu berücksichtigen, dass diese Partikel zum Beispiel keramisch und/oder metallisch sind und im Abgassystem nicht umgesetzt werden. Folglich sammeln sich diese Partikel im Abgassystem z. B. in der Nähe eines Partikelabscheiders an und/oder treffen immer wieder auf diesen auf. Eine solche Ansammlung von Partikeln kann zu einem lokalen bzw. schwankendem Druckverlust im Abgasstrom führen, der unerwünschte (leistungsmindernde) Effekte bei der Verbrennungskraftmaschine und/oder dem Abgassystem zur Folge haben kann. Außerdem steigt in diesem Fall auch die Belastung für den Partikelabscheider, so dass die Stabilität des Partikelabscheiders eine zunehmende Bedeutung erlangt.

Hiervon ausgehend ist es Aufgabe der hier vorliegenden Erfindung, die mit Bezug auf den Stand der Technik geschilderten technischen Probleme zumindest teilweise zu lösen. Insbesondere soll ein Partikelabscheider zur Behandlung von Abgasen angegeben werden, der trotz einer guten Sammelrate für Partikel dauerhaft für das Abgas mit einem geringen Druckverlust durchlässig bleibt. Zudem soll der Partikelabscheider hinsichtlich der Stabilität und einer (flexiblen und einfachen) Herstellung für eine Serienfertigung für den Automobilbau verbessert werden.

Diese Aufgaben werden gelöst mit einem Partikelabscheider gemäß den Merkmalen des Patentanspruches 1. Weitere vorteilhafte Ausgestaltungen der Anordnung sind in den abhängig formulierten Patentansprüchen angegeben. Es ist darauf hinzuweisen, dass die in den Unteransprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, veranschaulicht die Erfindung und führt weitere Ausführungsbeispiele an.

Der erfindungsgemäße Partikelabscheider zur Behandlung von Abgasen einer Verbrennungskraftmaschine weist mindestens eine für ein Abgas durchstrombare metallische Lage in einem Gehäuse mit einer Einlassöffnung, einer Auslassöffnung, einem Querschnitt und einer Zentrumsachse auf, wobei die mindestens eine metallische Lage wenigstens eine Wellung aufweist, die den Querschnitt des Gehäuses überspannt, wobei die mindestens eine metallische Lage Öffnungen mit einer Weite in einem Bereich von 0,1 mm bis 0,2 mm aufweist und wobei die Wellung sich von einem Bereich des Gehäuses bis zu einem anderen, davon beabstandeten Bereich des Gehäuses erstreckt, wobei die wenigstens eine Wellung ein quer zum Gehäuse verlaufendes Maximum und ein quer zum Gehäuse verlaufendes Minimum aufweist, und ein Abstand des Maximums zum Minimum gesehen in Richtung der Zentrumsachse mindestens einem mittleren Radius des Gehäuses entspricht, dadurch gekennzeichnet, dass die mindestens eine metallische Lage filterlos ausgeführt ist, so dass nur solche Partikel zurückgehalten werden, die um ein Vielfaches größer sind als die bei der Verbrennung von im Automobilbereich eingesetzten Kraftstoffen üblicherweise entstehenden Feststoffen, wie insbesondere Ruß, und zur Abscheidung von Ruß oder ähnlichen Feststoffen des verbrannten Brennstoffs nicht geeignet ist, wobei der die metallische Lage aufnehmende Spalt des Gehäuses sich bei einem Weg über den Umfang mehrmals zum einen der Einlassöffnung und zum anderen der Auslassöffnung annähert.

Mit einem Partikelabscheider wird hier insbesondere eine Vorrichtung angesprochen, die z. B. (keramische und/oder metallische) Spane, Splitter, Brocken, etc. zurückhält, die von einem Bauteil des Abgassystems abgelöst wurden, beispielsweise infolge der Vibrationen im Betrieb und/oder der Pulsation des Abgasstroms und/oder der Alterung. Insbesondere können solche Partikel zurückgehalten werden, die sich aus einem keramischen oder keramisch beschichteten Wabenkörper gelost haben. Auch können weniger stabile Partikel infolge des Impulses im Zusammenspiel mit der Steifigkeit oder Trägheit des Partikelabscheiders in kleinere, für weitere stromabwärts angeordnete Bauteile unbedenkliche Partikel zerteilt werden.

Die für das Abgas durchströmbare metallische Lage ist gerade im Hinblick auf die Zurückhaltung der vorstehend genannten Partikel ausgeführt. Bevorzugt ist hierbei, dass nur eine (einzelne) metallische Lage zum Einsatz kommt. Gegebenenfalls kann diese mit mehreren Schichten ausgeführt sein (z.B. einer ersten Schicht zum Heraussieben der Partikel und einer zweiten Schicht zur Fixierung der ersten Schicht in dem Gehäuse), wobei diese Schichten dann bevorzugt miteinander verlötet, verschweißt, versintert oder dergleichen sind. Damit stellt die metallische Lage insbesondere ein (einzelnes) Flächengebilde dar, das den Querschnitt des Gehäuses (vollständig) überspannt, so dass keine Strömung vorbei an der metallischen Lage möglich ist. Dabei ist die metallische Lage so robust bzw. formstabil ausgeführt, dass sie dauerhaft den Bedingungen (insbesondere den Kontakt mit den Partikeln) am Einsatzort des Abgassystems standhalten kann.

Die metallische Lage kann beispielsweise als gelochtes Blech, als Gitterblech, oder dergleichen ausgeführt sein. Zudem kann die metallische Lage (bevorzugt) als Gewebe ausgeführt sein, das regelmäßig und/oder unregelmäßig zueinander angeordnete Drähte, Filamente und/oder Späne umfasst. Auch können Gelege und Gewirre verwendet werden, die mit Drähten, Filamenten und/oder Spänen gebildet sind. Diese Drähte, Filamente und/oder Späne können z. B. mittels Widerstandschweißen, Sintern und/oder Löten miteinander verbunden sein. Insbesondere zeichnet sich die metallische Lage durch ihre Durchlässigkeit für Abgase aus, wobei ein sehr geringer Druckverlust eintritt. Mit "metallisch" ist hier insbesondere eine eisenhaltige und/oder aluminiumhaltige metallische Legierung gemeint.

Das Gehäuse ist in der Regel ein Blechmantel, der an die Form der Abgasleitung angepasst ist. Das Gehäuse kann aus Rohrmaterial mit verschiedenen Querschnittsformen rund, oval, eckig oder sonstigen erforderlichen Formen gebildet sein. Insbesondere kommt hier ein im Wesentlichen zylindrisches Gehäuse zum Einsatz, dass beispielsweise zwischen die angrenzenden Teile der Abgasleitung eingesetzt und mit diesen verschweißt werden kann.

Durch die Einlassöffnung strömt regelmäßig das Abgas in das Gehäuse ein und über die Auslassöffnung tritt das Abgas wieder aus. Die Zentrumsachse des Gehäuses verläuft regelmäßig durch den geometrischen Flächenschwerpunkt der Einlassöffnung und der Auslassöffnung, dabei kann die Zentrumsachse ggf. auch gekrümmt sein, wenn das Gehäuse eine Biegung aufweist. So bildet sie z. B. bei einer zylindrischen Ausführungsform die Zentrumsachse durch den Mittelpunkt des Kreisquerschnittes. Der Querschnitt des Gehäuses zwischen der Einlassöffnung und Auslassöffnung wird senkrecht zur Zentrumsachse betrachtet und kann variierende Flächengrößen und/oder Flächenformen aufweisen. Bevorzugt ist aber, dass die Größe und Form des Querschnitts entlang der Zentrumsachse gleich ausgebildet ist, also Einlassöffnung, Querschnitt und Auslassöffnung diesbezüglich gleich sind. Im Hinblick auf die Lage der mindestens einen metallischen Lage im Gehäuse ist bevorzugt, dass diese sich weder über die Einlassöffnung noch die Auslassöffnung hinaus erstreckt.

Zudem weist die metallische Lage wenigstens eine Wellung auf. Bevorzugt ist, dass die Anzahl der Wellungen (also insbesondere der Wellenberge oder Wellentäler) sehr gering ist. Ganz besonders bevorzugt ist, dass maximal fünf (5) Wellungen (also Wellenberge und Wellentäler) vorgesehen sind. Durch die Wellung wird eine deutlich vergrößerte Oberfläche geschaffen, die das anströmende Abgas anströmen kann. Damit wird eine maximale Flächenausnutzung in Kombination mit einer geringen baulichen Ausdehnung des Partikelabscheiders und einem guten Strömungsverhalten erreicht. Zugleich kann die Wellung eine Umleitung für die Partikel bewirken, so dass Partikel in vorbestimmten Bereichen der metallischen Lage gesammelt werden. Da die Wellung sich praktisch von einem Bereich des Gehäuses bis zu einem anderen, davon beabstandeten Bereich des Gehäuses erstreckt, ist es möglich, dass zentral zurückgehaltene Partikel aufgrund der Abgasströmung nach außen hin zum Gehäuse verlagert werden. Dort stellen sie einen geringeren Strömungswiderstand dar. Dadurch wird z. B. erreicht, dass andere Bereiche des Partikelabscheiders für das Abgas stets (relativ ungestört) durchströmbar bleiben. Außerdem wird so realisiert, dass die Partikel quer zur Strömungsrichtung des Abgases in der Wellung (immer wieder) bewegt werden. Diese aufgrund der sich ändernden Strömungsbedingungen im Abgassystem erzeugte Bewegung hat einen abrasiven Effekt auf die Partikel, so dass diese vielfach zerkleinert werden und dann nach Erreichen einer unkritischen Größe durch die metallische Lage hindurch treten können. Gerade dieser Effekt stellt eine beachtliche Weiterentwicklung gegenüber Sieben dar, die nur zentral eine Vertiefung haben, wo die Partikel (regungslos) im Bereich der Hauptströmung gesammelt werden. Insbesondere sind bei dem Partikelabscheider Verlagerungsmittel vorgesehen, die zentral (im Bereich der Hauptströmung des Abgases) zurückgehaltenen Partikeln nach außen hin (in einen Bereich der Randströmung des Abgases) verlagern. Das Abgas selbst kann die Verlagerung der Partikel zudem begünstigen bzw. sogar verursachen, so dass die Verlagerungsmittel eine (passive) Führung der Partikel aus dem Zentrum darstellen. Bevorzugt bildet die Wellung der metallischen Lage die Verlagerungsmittel. Zusätzlich oder alternativ ist beispielsweise die Oberfläche der Ablagerungsseite der metallischen Lage rau ausgeführt, so dass die zurückgehaltenen Partikel bei einer erzwungenen Relativbewegung, beispielsweise von innen nach außen, zerkleinert werden. Darüber hinaus ist anzumerken, dass diese Wellung auch beidseits am Gehäuse fixiert werden kann und somit insgesamt die Position der metallischen Lage und die Ausrichtung zur Strömungsrichtung des Abgases besonders stabil eingestellt und aufrecht erhalten werden kann, selbst wenn die metallische Lage selbst filigran ausgestaltet ist.

In einer weiteren vorteilhaften Ausführungsform des erfindungsgemäßen Partikelabscheiders überspannen mehrere Wellungen nach Art von Sekanten den Querschnitt. Hiermit ist insbesondere gemeint, dass mehrere geradlinig verlaufende Wellungen vorgesehen sind, die sich bis zu gegenüberliegenden Bereiche des Gehäuses erstrecken. Dabei sind bevorzugt mindestens zwei (2) Wellungen vorgesehen, die eine Länge haben, die kleiner als der Durchmesser des Querschnitts sind (nach Art von Sekanten). Diese am Rand des Gehäuses positionierten Wellungen sind im Hinblick auf die Strömungscharakteristik des Partikelabscheiders weniger relevant (langsamere Randströmung), so dass hier auch kleinere Bewegungsräume für die Partikel bereit gestellt werden können. Gleichzeitig sorgen diese Wellungen für eine besondere Stabilität der metallischen Lage quer zur Zentrumsachse und tragen deshalb besonders zur Formsteifigkeit und Dauerhaltbarkeit bei.

In einer weiteren vorteilhaften Ausführungsform des erfindungsgemäßen Partikelabscheiders verläuft die wenigstens eine Wellung in einer Ebene senkrecht zur Zentrumsachse. Bevorzugt ist weiter, dass mehrere Wellungen in einer gemeinsamen Querschnittsebene des Gehäuses enden, also insbesondere die Wellenberge und/oder Wellentäler im Wesentlichen dieselbe Distanz zur Einlassöffnung oder zur Auslassöffnung des Gehäuses aufweisen. Die Entfernung der Wellungen zueinander in radialer Richtung (bzw. in Richtung quer zur Zentrumsachse) kann variieren, ist aber bevorzugt zumindest für einen Teil der Wellungen in etwa gleich. Hierdurch kann eine gleichmäßige Anströmung der metallischen Lage erreicht werden. Zudem können die umliegenden Bauteile, wie das Gehäuse, mit geringem Fertigungsaufwand und ggf. hoher Stückzahl von gleichen Gehäusebauteilen gefertigt werden.

Gemäß einer weiteren vorteilhaften Ausführungsform des Partikelabscheiders erstreckt sich die wenigstens eine Wellung durch eine zur Zentrumsachse geneigten Ebene. Hierdurch wird eine weitere Vergrößerung der Oberfläche der metallischen Lage gegenüber dem Querschnitt des Gehäuses erreicht. Weiterhin kann durch eine geeignete Anordnung der Wellung z. B. eine Voraus scheidung von Partikeln und/oder eine Sammelzone in schwach durchströmten Bereichen des Gehäuses gebildet werden, ohne dass der Strömungsquerschnitt übermäßig verengt wird.

Zudem kann die mindestens eine Wellung einen Wellenanstieg aufweisen, der um zumindest 45° zur Ebene geneigt ist. Insbesondere wird hier vorgeschlagen, dass die Wellung einen Wellenanstieg bzw. eine Wellenflanke mit einem Winkel zur Ebene von zumindest 60° oder sogar von zumindest 80° aufweist. Durch einen starken Wellenanstieg kann erreicht werden, dass, nachdem sich eine größere Menge von Partikeln senkrecht zur Anströmung gesammelt hat, die Abgase durch die stets freien Wellenanstiege (Wellenflanken) ohne erhöhten Widerstand durchströmen. Zudem kann die Staudruckwirkung der Wellenberge und Wellentäler durch steile Wellenanstiege wirksam reduziert werden.

In einer weiteren vorteilhaften Ausführungsform des Partikelabscheiders weist die wenigstens eine Wellung ein quer zum Gehäuse verlaufendes Maximum und ein quer zum Gehäuse verlaufendes Minimum auf, und ein Abstand des Maximums zum Minimum entspricht mindestens einem mittleren Radius des Gehäuses. Da (nicht runde) Leitungen für Fluide häufig für die Strömungsberechnung in Rundrohre umgerechnet werden (z. B. in den hydraulischen Durchmesser), wird hier ein mittlerer Radius als Bezug genommen. Da es bei eckigen Querschnitten zu vergrößerten Zonen mit verlangsamter Strömung kommt, wird mithilfe Division der Fläche der Leitung durch den (benetzten) Umfang der Leitung des jeweiligen Querschnittes in der Strömungstechnik der hydraulische Radius gebildet. In einem solchen Fall entspricht der mittlere Radius dem hydraulischen Radius. Im Falle einer z. B. ovalen Rundung des Gehäuses bezieht sich der mittlere Radius auf das arithmetische Mittel der zwei überlagerten Kreise, die die Maxima bei 0° und 180° bzw. 90° und 270° bilden. Bei einem solchen Abstand zwischen dem Maximum der Wellung (Wellenberge) und dem Minimum der Wellungen (Wellentäler) wird eine Vervielfachung der angeströmten Fläche des Partikelabscheiders erreicht. Folglich wird hierdurch eine Vervielfachung der Oberfläche des Partikelabscheiders erreicht, die - für sich selbst genommen - zu keiner weiteren baulichen Ausdehnung des Partikelabscheiders führt.

In einer weiteren vorteilhaften Ausführungsform des Partikelabscheiders ist mindestens eine metallische Lage in einem umlaufenden Spalt des Gehäuses angeordnet. Wie bereits obig ausgeführt, unterliegen alle Bauteile in einem Abgassystem ständigen (äußeren) Vibrationen und der Abgaspulsation. Zugleich ist es aber erstrebenswert, die metallische Lage möglichst dünnwandig auszuführen, so dass die strömungswirksame Fläche, die also von dem Abgas angeströmt wird und somit den wirksamen Widerstand bildet, gering gehalten wird. Solch filigrane Strukturen, Gewebe und Gewirrlagen weisen eine hohe Flexibilität auf und können nur schlecht plastisch in Wellenform gebracht werden. Um dennoch die hier vorgeschlagene metallische Lage einfach (elastisch) verformen zu können und sicherzustellen, dass die Form im eingebauten Zustand des Partikelabscheiders auch unter Vibrationen und Abgaspulsationen stabil bleibt, wird die metallische Lage in ihrer Wellung durch einen umlaufenden Spalt im Gehäuse gehalten. In einen solchen Spalt kann die metallische Lage unverformt geschoben oder gelegt oder durch einen Spalt zwischen zwei Gehäusehälften, die aufeinandergesetzt werden, geklemmt werden. Dies schließt nicht aus, dass die metallische Lage zudem stoffschlüssig mit dem Gehäuse verbunden ist, z. B. durch Schweißen, Kleben oder Löten. "Stoffschlüssig" werden alle Verbindungen genannt, bei denen die Verbindungspartner (Gehäuseteile und/oder metallische Lage) durch atomare oder molekulare Kräfte zusammengehalten werden.

Als metallische Lage kommt beispielsweise ein Vlies in Betracht, das miteinander versinterte Drahtfilamente aufweist. Dieses lässt sich bevorzugt mit mindestens einem der nachfolgenden Merkmale beschreiben:
- Durchmesser der Drahtfilamente: zwischen 20 und 50 µm [Mikrometer]; insbesondere aufgebaut mit zwei verschiedenartigen (miteinander gemischten und/oder verbundenen) Drahtfilamenten (z. B. einerseits 20 bis 25 um; andererseits 38 um bis 42 µm);
- Flächengewicht des Vlies: zwischen 350 g/mm² und 550 g/mm² [Gramm pro Quadratmillimeter];
- Luftdurchlässigkeit des Vlies: zwischen 2300 und 3500 l/m²/s [Liter pro Quadratmeter und Sekunde].

Ein solches Vlies kann zum Zurückhalten von Ruß und/oder anderen Feststoffen des Abgases eingesetzt werden.

In einer Ausführungsform eines Partikelabscheiders weist die mindestens eine metallische Lage Öffnungen mit einer Weite in einem Bereich von mindestens 0,05 mm [Millimeter] auf. Ganz besonders bevorzugt ist, dass diese nur Öffnungen aufweist, die mindestens eine Ausdehnung von 0,05 mm haben. In diesem Fall hat die metallische Lage bevorzugt eine Abscheidewirkung (nur) für Partikel, die größer als die Öffnungen sind. Ganz besonderes bevorzugt ist, dass die Öffnungen maximal eine Weite bis 0,25 mm aufweisen, insbesondere im Bereich von 0,1 bis 0,2 mm. Durch den Partikelabscheider sollen insbesondere solche Partikel zurückgehalten werden, die nachfolgende (stromabwärts liegende) Komponenten des Abgassystems beschädigen oder verstopfen können. Gleichzeitig sollen aber auch möglichst große Öffnungen vorgesehen sein, die somit einen möglichst geringen Strömungswiderstand bieten. Eine (vorrangige) Umsetzung von Feststoffen aus der Verbrennung des Brennstoffs (Benzin, Diesel, etc.) steht hierbei nicht im Vordergrund.

In einer weiteren vorteilhaften Ausführungsform des erfindungsgemäßen Partikelabscheiders ist die mindestens eine metallische Lage filterlos ausgeführt. Hiermit ist insbesondere gemeint, dass die metallische Lage nicht nach Art eines Wandstromfilters und/oder Tiefenfilters zur Abscheidung von Ruß oder ähnlichen Feststoffen des verbrannten Brennstoffs funktioniert. Ebenso wird hierunter gegebenenfalls auch verstanden, dass die metallische Lage keine katalytische Beschichtung aufweist, mit der diese Feststoffe (Ruß, etc.) umgesetzt werden können. Demnach ist die metallische Lage praktisch nur ein mechanischer Schutz gegenüber massereichen, voluminösen bzw. großflächigen Partikeln, die nachfolgende Bauteile verstopfen und/oder beschädigen können. Insbesondere bietet sie einen Schutz gegenüber scharfkantigen Splittern, insbesondere von keramischen Wabenkörpern und/oder keramischen Beschichtungen. Insoweit hat die filterlose metallische Lage insbesondere eine reine Siebfunktion, so dass nur solche Partikel zurückgehalten werden, die um ein Vielfaches größer sind als die bei der Verbrennung von im Automobilbereich eingesetzten Kraftstoffen üblicherweise entstehenden Feststoffen (wie insbesondere Ruß).

Im Rahmen der Erfindung ist auch ein Kraftfahrzeug beschrieben, das wenigstens eine Verbrennungskraftmaschine und ein Abgassystem aufweist, wobei das Abgassystem mit einer Abgasrückführungsleitung ausgeführt ist und wobei mindestens ein erfindungsgemäßer Partikelabscheider in der Abgasrückführungsleitung angeordnet ist.

In einer Verbrennungskraftmaschine und dem Abgassystem sind bewegte Teile vorgesehen. Insbesondere der Zylinder und Kolben der Verbrennungskraftmaschine sowie die Verdichterschaufeln eines Turboverdichters sind darauf angewiesen, dass sie trotz hoher thermischer Belastung eine gute Dichtung bewirken. Gerade scharfkantige keramische Teile können Turboverdichterschaufeln und Kolbendichtringe stark beschädigen. Hierbei wird nun insbesondere vorgeschlagen, den erfindungsgemäßen Partikelabscheider hinter einem keramischen Wabenkörper und/oder einem keramisch beschichteten Wabenkörper anzuordnen, vor allen Dingen in (d. h. einschließlich "unmittelbar an") der Abgasrückführleitung vor einem Turboverdichter. Durch den Partikelabscheider ist der negative Einfluss der Vergrößerung des Strömungswiderstandes praktisch dauerhaft vernachlässigbar. Zudem kann der Partikelabscheider aufgrund seiner anpassbaren baulichen Ausdehnung und Flexibilität sehr flexibel eingesetzt werden, vor allen Dingen in Bereichen der Abgasleitung, die bisher aus baulichen Gründen ungenutzt blieben.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Die Figuren sind schematisch und benennen gleiche Bauteile mit gleichen Bezugszeichen. Es zeigen:
- Fig. 1:: einen Partikelabscheider mit mehrfacher Wellung in einer senkrechten Ebene;
- Fig. 2:: einen Partikelabscheider mit mehrfacher Wellung und Spalt im Gehäuse;
- Fig. 3:: einen Partikelabscheider mit einfacher Wellung entlang einer geneigten Ebene;
- Fig. 4:: einen Partikelabscheider mit einfacher Wellung entlang einer senkrechten Ebene;
- Fig. 5:: eine zweischichtige metallische Lage;
- Fig. 6:: einen Partikelabscheider in Draufsicht mit unrundem Querschnitt; und
- Fig. 7:: ein Kraftfahrzeug mit einer Verbrennungskraftmaschine und einem Abgassystem mit einer Abgasrückführungsleitung.

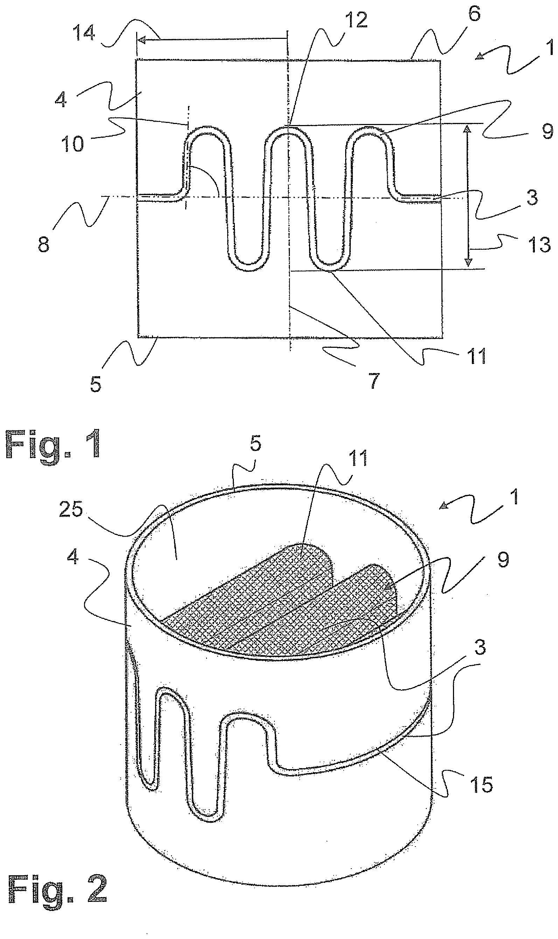

Fig. 1 zeigt einen Partikelabscheider 1 in der Seitenansicht, wobei die metallische Lage 3 durch die Wellenlinie im Zentrum eines Gehäuses 4 darstellt ist. Hierbei sind die Einlassöffnung 5 unten und die Auslassöffnung 6 oben am Gehäuse 4 angeordnet, wenn eine Durchströmung von unten nach oben erfolgen soll. Diese Bezeichnung kann folglich bei einer entgegengesetzten Durchströmung einfach umgekehrt werden. Die Zentrumsachse 7 des Gehäuses 4 bildet in diesem Fall ebenfalls eine Symmetrieachse für den dargestellten Partikelabscheider 1. Quer (hier senkrecht) zur Zentrumsachse 7 ist die Ebene 8 angedeutet, die im dargestellten Beispiel mittig durch das Gehäuse 4 angedeutet ist und sich durch den linken und rechten Rand der metallischen Lage 3 erstreckt. Die hier dargestellte Wellung 9 zeigt drei Minima 12 (also in Strömungsrichtung des Abgases gesehen Wellentäler) und zwei Maxima 11 (also in Strömungsrichtung des Abgases gesehen Wellenberge). Der Wellenanstieg 10 (bzw. die Wellenflanke) jeder der Wellungen 9 ist um fast 90° zur Ebene 8 geneigt. In den Minima 12 können bei der Anströmung die Partikel gesammelt werden und trotzdem bleibt der größte Teil der metallischen Lage in Form der Wellenanstiege 10 frei für die Durchströmung. Weiterhin ist in dieser Darstellung zu sehen, dass der Abstand 13 zwischen dem Maximum 11 und dem Minimum 12 gesehen in Richtung der Zentrumsachse 7 etwas größer ist als der mittlere Radius 14 des dargestellten Partikelabscheiders 1 bzw. Gehäuses 4.

In Fig. 2 ist ein der Variante aus Fig. 1 ähnlicher Partikelabscheider 1 in räumlicher Darstellung gezeigt. Das dargestellte Gehäuse 4 zeigt einen gleichmäßigen kreisförmigen Querschnitt 25 über die gesamte axiale Erstreckung. Die metallische Lage 3 ist in einem umlaufenden Spalt 15 im Gehäuse 4 gehalten. Dieser Spalt 15 kann unterschiedlich hergestellt werden, z. B. durch eine eingefräste Nut auf der Innenseite des Gehäuses 4 oder durch zwei (zuvor getrennte) Gehäusehälften, die mit der dazwischen liegenden metallischen Lage 3 zum Gehäuse 4 zusammengefügt werden. Infolge der Wellung der metallischen Lage 3 hat auch dieser Spalt 15 bzw. die Füge-Verbindung von Gehäuse und metallische Lage keinen "geradlinigen" Verlauf, sondern nähert sich bei einem Weg über den Umfang (mehrmals) zum einen der Einlassöffnung und zum anderen der Auslassöffnung an (teilweise mäanderförmiger Verlauf). Diese stabile Verbindung hat einen erheblichen Einfluss auf die Stabilität des Partikelabscheiders 1.

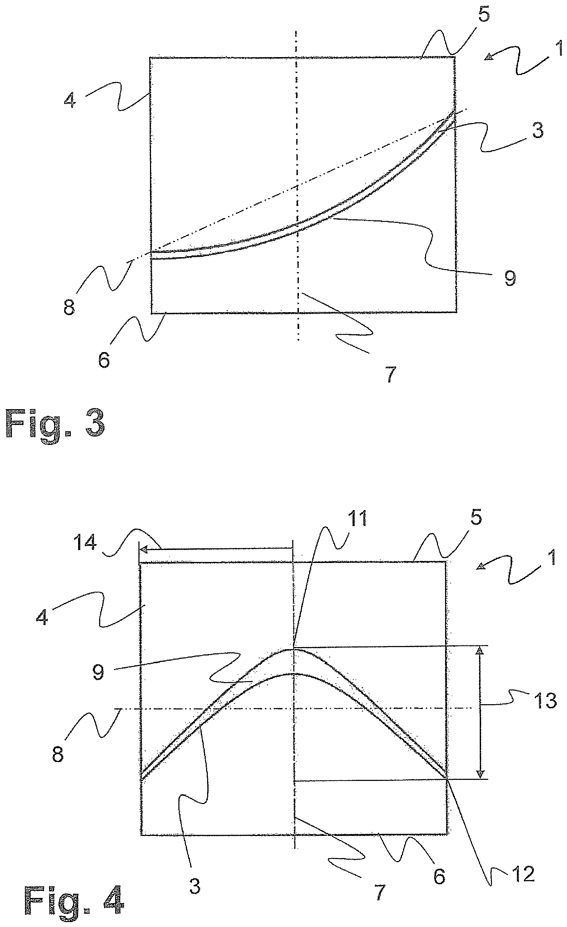

In Fig. 3 ist ein Partikelabscheider 1 gezeigt, bei dem die metallische Lage 3 lediglich eine Wellung 9 entlang einer zur Zentrumsachse 7 schrägen bzw. geneigten Ebene 8 aufweist. Die Einlassöffnung 5 ist in dieser Darstellung oben und die Auslassöffnung 6 unten, dies kann aber auch umgekehrt betrachtet werden. Durch die Wellung 9 wird der Partikelabscheider lediglich im linken Bereich der Darstellung durch sich ansammelnde Partikel möglicherweise zugesetzt. Der Rest der Fläche des Partikelabscheiders 1 bleibt für die Durchströmung frei.

In Fig. 4 wird ein Partikelabscheider 1 gezeigt, bei dem die metallische Lage 3 ebenfalls eine (einzelne) Wellung 9 aufweist, diese ist jedoch entlang einer Ebene 8 senkrecht zur Zentrumsachse 7 des Gehäuses 4 ausgerichtet. Die Anströmrichtung des dargestellten Partikelabscheiders 1 ist durch die Einlassöffnung 5 angegeben und führt entlang der Zentrumsachse 7 von oben nach unten durch die Auslassöffnung 6 wieder hinaus. Hierbei sammeln sich mögliche Partikel im Abgasstrom an den Außenseiten. Wenn der Partikelabscheider 1 z. B. rund ist, sind die Ablagerungsorte für mögliche Partikel deutlich kleiner als die freibleibende Fläche. Dies ist auch durch andere Querschnitte des Gehäuses 4 erreichbar. Zudem ist der Abstand 13 zwischen dem Maximum 11 und dem Minimum 12 der Wellungen größer als der mittlere Radius 14 des Gehäuses 4, wodurch eine Verdopplung der anströmbaren Fläche gegenüber dem Querschnitt 25 des Partikelabscheiders 1 erreicht wird.

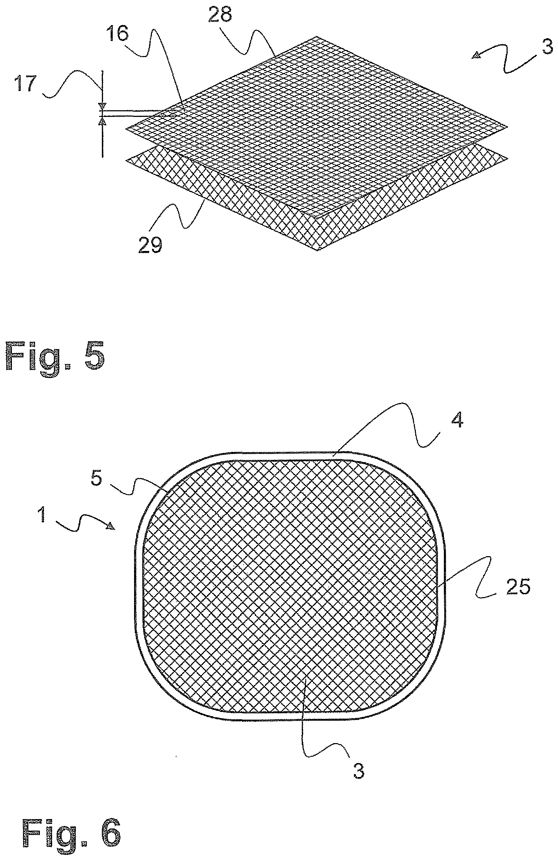

Fig. 5 zeigt eine mehrschichtige Version einer metallischen Lage 3, wobei eine erste Schicht 28 und eine zweite Schicht 29 in direktem, flächigem Kontakt zueinander angeordnet sind (hier teilweise als Explosionsdarstellung). Die zuerst angeströmte erste Schicht 28 hat eine Weite 17 der Öffnungen 16, die um ein Vielfaches kleiner ist, als die Weite 17 der Öffnungen 16 in der nachfolgenden zweiten Schicht 29. Damit übernimmt (nur) die erste Schicht die Funktion der Partikelabscheidung, während die zweite Schicht 29 (allein) zur (rückwärtigen) Stütze bzw. teilweisen Auflage der ersten Schicht 28 dient. Jedenfalls hat die metallischen Lage 3 (bzw. hier die erste Schicht 28) Öffnungen 16 mit einer Weite 17, die in einem Bereich von 0,05 bis 0,25 mm liegen.

In Fig. 6 ist ein Partikelabscheider 1 in Draufsicht gezeigt, wobei die metallische Lage 3 der Einfachheit halber mit einer Struktur gezeigt ist, die der Wellung optisch nicht entspricht. Fig. 6 zeigt bloß eine von vielfältigen Möglichkeiten der Ausgestaltung des Querschnittes 25 des Gehäuses 4 bzw. der Einlassöffnung 5. Ebenfalls möglich ist, dass die Einlassöffnung und die Auslassöffnung 6 zueinander verschiedene und/oder zum sonstigen Querschnitt 25 des Gehäuses 4 verschiedene Formen aufweist.

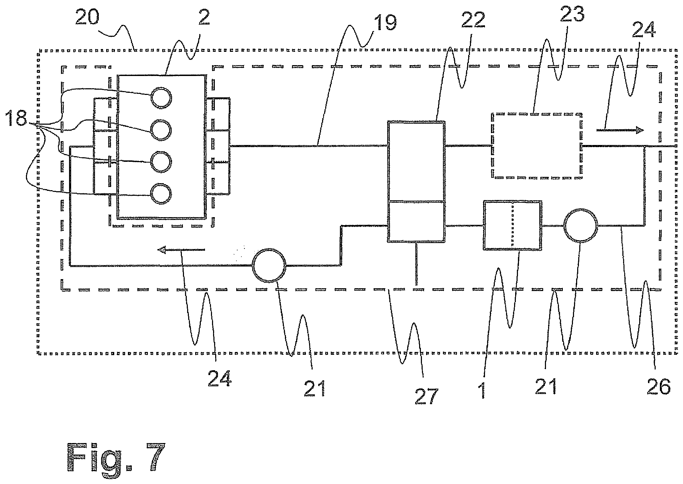

In Fig. 7 ist ein Kraftfahrzeug 20 gezeigt, das eine Verbrennungskraftmaschine 2, einen Partikelabscheider 1, einen Turbolader 22 und optional eine Abgasreinigungseinheit 23 aufweist. Das Abgassystem 27 besteht aus einer Abgasleitung 19 und einer Abgasrückführleitung 26. Der Hubraum 18 der Verbrennungskraftmaschine 2 wird von der links dargestellten Seite mit aufgeladenem Abgas versorgt und auf der anderen Seite strömt Abgas in Strömungsrichtung 24 wieder aus. Durch den Partikelabscheider 1 in der Abgasrückführleitung 26 ist der Turboverdichter des Turboladers 22 vor jeglichen größeren Partikeln im Abgassystem 27 geschützt. Diese Partikel können beispielsweise von einer (teilweise) keramischen Abgasreinigungseinheit 23 stammen, die das Abgas zuvor durchströmt hat. Somit schützt der Partikelabscheider 1 alle nachfolgenden (stromabwärts angeordneten) Bauteile vor größeren Partikeln aus der Verbrennungskraftmaschine 2 sowie die vor dem Partikelabscheider 1 liegenden Abschnitten der Abgasleitung 19. Solche Bauteile sind insbesondere der Turbolader 22 und/oder andere Abgasreinigungseinheiten und/oder die Kühler 21 (bzw. Wärmetauscher), insbesondere in der Abgasrückführleitung 26. Somit sind auch die Verbrennungskraftmaschine 2 und ihre Hubräume 18 vor der Beschädigung durch größere Partikel geschützt. Die Fig. 7 zeigt eine beliebige technisch sinnvolle Anordnung der Partikelabscheider 1 und stellt keine Begrenzung der exakten Anordnung des Partikelabscheiders 1 dar.

Damit löst die Erfindung zumindest teilweise die im Zusammenhang mit dem Stand der Technik geschilderten technischen Probleme. Insbesondere wurden Partikelabscheider vorgeschlagen, der trotz geringer baulicher Ausdehnung eine große Oberfläche für einen möglichst geringen Strömungswiderstand und eine geringe Neigung zur Zusetzung im Laufe des dauerhaften Betriebes hat.

### Bezugszeichenliste

- 1: Partikelabscheider
- 2: Verbrennungskraftmaschine
- 3: metallische Lage
- 4: Gehäuse
- 5: Einlassöffnung
- 6: Auslassöffnung
- 7: Zentrumsachse
- 8: Ebene
- 9: Wellung
- 10: Wellenanstieg
- 11: Maximum
- 12: Minimum
- 13: Abstand
- 14: mittlerer Radius
- 15: Spalt
- 16: Öffnungen
- 17: Weite
- 18: Hubraum
- 19: Abgasleitung
- 20: Kraftfahrzeug
- 21: Kühler
- 22: Turbolader
- 23: Abgasreinigungseinheit
- 24: Strömungsrichtung
- 25: Querschnitt
- 26: Abgasrückführleitung
- 27: Abgassystem
- 28: erste Schicht
- 29: zweite Schicht

## Patentansprüche

1. Partikelabscheider (1) zur Behandlung von Abgasen einer Verbrennungskraftmaschine (2), wobei mindestens eine für ein Abgas durchströmbare metallische Lage (3) in einem Gehäuse (4) mit einer Einlassöffnung (5), einer Auslassöffnung (6), einem Querschnitt (25) und einer Zentrumsachse (7) angeordnet ist, wobei die mindestens eine metallische Lage (3) wenigstens eine Wellung (9) aufweist, die den Querschnitt (25) des Gehäuses (4) überspannt, wobei die mindestens eine metallische Lage (3) Öffnungen (16) mit einer Weite (17) in einem Bereich von 0,1 mm bis 0,2 mm aufweist und wobei die Wellung (9) sich von einem Bereich des Gehäuses (4) bis zu einem anderen, davon beabstandeten Bereich des Gehäuses (4) erstreckt, wobei die wenigstens eine Wellung (9) ein quer zum Gehäuse (4) verlaufendes Maximum (11) und ein quer zum Gehäuse (4) verlaufendes Minimum (12) aufweist, und ein Abstand (13) des Maximums (11) zum Minimum (12) gesehen in Richtung der Zentrumsachse (7) mindestens einem mittleren Radius (14) des Gehäuses (4) entspricht, **dadurch gekennzeichnet, dass** die mindestens eine metallische Lage (3) filterlos ausgeführt ist, so dass nur solche Partikel zurückgehalten werden, die um ein Vielfaches größer sind als die bei der Verbrennung von im Automobilbereich eingesetzten Kraftstoffen üblicherweise entstehenden Feststoffen, wie insbesondere Ruß, und zur Abscheidung von Ruß oder ähnlichen Feststoffen des verbrannten Brennstoffs nicht geeignet ist, wobei der die metallische Lage (3) aufnehmende Spalt (15) des Gehäuses (4) sich bei einem Weg über den Umfang mehrmals zum einen der Einlassöffnung (5) und zum anderen der Auslassöffnung (6) annähert.

2. Partikelabscheider (1) nach Patentanspruch 1, wobei nur eine einzelne metallische Lage (3) vorgesehen ist.

3. Partikelabscheider (1) nach Patentanspruch 1 oder 2, wobei die metallische Lage (3) mit mehreren Schichten (28,29) ausgeführt ist, insbesondere mit einer ersten Schicht (28) zum Heraussieben der Partikel und einer zweiten Schicht (29) zur Fixierung der ersten Schicht (28) im Gehäuse (4).

4. Partikelabscheider (1) nach einem der vorhergehenden Patentansprüche, wobei die metallische Lage (3) ein einzelnes Flächengebilde darstellt, das den Querschnitt (25) des Gehäuses (4) vollständig überspannt, so dass keine Strömung vorbei an der metallischen Lage (3) möglich ist.

5. Partikelabscheider (1) nach einem der vorhergehenden Patentansprüche, wobei die metallische Lage als Gewebe ausgeführt ist, das regelmäßig und/oder unregelmäßig zueinander angeordnete Drähte, Filamente und/oder Späne umfasst, die insbesondere mittels Widerstandschweißen, Sintern und/oder Löten miteinander verbunden sind.

6. Partikelabscheider (1) nach einem der vorhergehenden Patentansprüche, bei dem Verlagerungsmittel vorgesehen sind, die zentral zurückgehaltene Partikel nach außen hin verlagern, wobei insbesondere die Oberfläche der Ablagerungsseite der metallischen Lage rau ausgeführt ist, so dass die zurückgehaltenen Partikel bei einer erzwungenen Relativbewegung zerkleinert werden.

7. Partikelabscheider (1) nach einem der vorhergehenden Patentansprüche, wobei mehrere Wellungen (9) nach Art von Sekanten den Querschnitt (25) überspannen.

8. Partikelabscheider (1) nach einem der vorhergehenden Patentansprüche, wobei die wenigstens eine Wellung (9) in einer Ebene (8) senkrecht zur Zentrumsachse (7) verläuft.

9. Partikelabscheider (1) nach einem der Patentansprüche 1 bis 7, wobei die wenigstens eine Wellung (9) sich durch eine zur Zentrumsachse (7) geneigten Ebene (8) erstreckt.

10. Partikelabscheider (1) nach einem der vorhergehenden Patentansprüche, wobei die mindestens eine Wellung (9) einen Wellenanstieg (10) aufweist, der um zumindest 45° zur Ebene (8) geneigt ist.

11. Kraftfahrzeug (20), aufweisend wenigstens eine Verbrennungskraftmaschine (2) und ein Abgassystem (27), wobei das Abgassystem (27) mit einer Abgasrückführleitung (26) ausgeführt ist und wobei mindestens ein Partikelabscheider (1) nach einem der vorhergehenden Patentansprüche in der Abgasrückführleitung (26) angeordnet ist.

## Claims

1. Particle separator (1) for the treatment of exhaust gases of an internal combustion engine (2), wherein at least one metallic layer (3) through which an exhaust gas can flow is arranged in a housing (4) with an inlet opening (5), with an outlet opening (6), with a cross section (25) and with a central axis (7), wherein the at least one metallic layer (3) has at least one undulation (9) which spans the cross section (25) of the housing (4), wherein the at least one metallic layer (3) has openings (16) with a width (17) in a range from 0.1 mm to 0.2 mm, and wherein the undulation (9) extends from one region of the housing (4) to another region of the housing (4) spaced apart therefrom, wherein the at least one undulation (9) has a maximum (11) running transversely with respect to the housing (4) and a minimum (12) running transversely with respect to the housing (4), and a spacing (13) of the maximum (11) from the minimum (12) as viewed in the direction of the central axis (7) corresponds at least to an average radius (14) of the housing (4), **characterized in that** the at least one metallic layer (3) is of filter-free design, such that only particles several times larger than the solids, such as in particular soot, normally generated during the combustion of fuels used in the automotive field are retained, and is not suitable for the separation of soot or similar solids of the combusted fuel, wherein the gap (15), which receives the metallic layer (3), of the housing (4), on a path over the circumference, repeatedly approaches firstly the inlet opening (5) and secondly the outlet opening (6).

2. Particle separator (1) according to Patent Claim 1, wherein only a single metallic layer (3) is provided.

3. Particle separator (1) according to Patent Claim 1 or 2, wherein the metallic layer (3) is formed with a plurality of plies (28, 29), in particular with a first ply (28) for filtering out the particles and a second ply (29) for fixing the first ply (28) in the housing (4).

4. Particle separator (1) according to one of the preceding patent claims, wherein the metallic layer (3) constitutes a single areal structure which completely spans the cross section (25) of the housing (4), such that a flow past the metallic layer (3) is not possible.

5. Particle separator (1) according to one of the preceding patent claims, wherein the metallic layer is in the form of a fabric which comprises wires, filaments and/or chips which are in a regular and/or irregular arrangement with respect to one another and which are in particular connected to one another by means of resistance welding, sintering and/or brazing.

6. Particle separator (1) according to one of the preceding patent claims, in which displacement means are provided which displace particles retained centrally towards the outside, wherein, in particular, the surface of the accumulation side of the metallic layer is of rough form such that the retained particles are broken down during a forced relative movement.

7. Particle separator (1) according to one of the preceding patent claims, wherein a plurality of undulations (9) span the cross section (25) in the manner of secants.

8. Particle separator (1) according to one of the preceding patent claims, wherein the at least one undulation (9) runs in a plane (8) perpendicular to the central axis (7).

9. Particle separator (1) according to one of Patent Claims 1 to 7, wherein the at least one undulation (9) extends through a plane (8) which is inclined with respect to the central axis (7).

10. Particle separator (1) according to one of the preceding patent claims, wherein the at least one undulation (9) has an undulation rise (10) which is inclined with respect to the plane (8) by at least 45°.

11. Motor vehicle (20) having at least one internal combustion engine (2) and an exhaust system (27), wherein the exhaust system (27) is formed with an exhaust-gas recirculation line (26), and wherein at least one particle separator (1) according to one of the preceding patent claims is arranged in the exhaust-gas recirculation line (26) .

## Revendications

1. Séparateur de particules (1) pour le traitement de gaz d'échappement d'un moteur à combustion interne (2), au moins une couche métallique (3) pouvant être parcourue par un gaz d'échappement étant disposée dans un boîtier (4) ayant une ouverture d'entrée (5), une ouverture de sortie (6), une section transversale (25) et un axe central (7), l'au moins une couche métallique (3) présentant au moins une ondulation (9) qui couvre la section transversale (25) du boîtier (4), l'au moins une couche métallique (3) présentant des ouvertures (16) ayant une largeur (17) dans une plage de 0,1 mm à 0,2 mm et l'ondulation (9) s'étendant depuis une région du boîtier (4) jusqu'à une autre région du boîtier (4) espacée de celle-ci, l'au moins une ondulation (9) présentant un maximum (11) s'étendant transversalement au boîtier (4) et un minimum (12) s'étendant transversalement au boîtier (4), et une distance (13) du maximum (11) au minimum (12), vu dans la direction de l'axe central (7), correspondant au moins à un rayon moyen (14) du boîtier (4), **caractérisé en ce que** l'au moins une couche métallique (3) est réalisée sans filtre de telle sorte que seules soient retenues les particules qui sont beaucoup plus grosses que les matières solides se présentant habituellement lors de la combustion de carburant utilisé dans le domaine automobile, comme par exemple la suie, et n'est pas appropriée pour la séparation de suie ou de matières solides similaires du carburant brûlé, la fente (15) du boîtier (4) recevant la couche métallique (3) se rapprochant lors d'un trajet sur la périphérie plusieurs fois d'une part de l'ouverture d'entrée (5) et d'autre part de l'ouverture de sortie (6).

2. Séparateur de particules (1) selon la revendication 1, dans lequel il n'est prévu qu'une seule couche métallique unique (3).

3. Séparateur de particules (1) selon la revendication 1 ou 2, dans lequel la couche métallique (3) est réalisée avec plusieurs couches (28, 29), en particulier avec une première couche (28) pour éliminer par filtrage les particules et une deuxième couche (29) pour la fixation de la première couche (28) dans le boîtier (4).

4. Séparateur de particules (1) selon l'une quelconque des revendications précédentes, dans lequel la couche métallique (3) constitue une structure plane unique qui couvre complètement la section transversale (25) du boîtier (4), de sorte qu'aucun écoulement devant la couche métallique (3) ne soit possible.

5. Séparateur de particules (1) selon l'une quelconque des revendications précédentes, dans lequel la couche métallique est réalisée sous forme de tissu, qui comprend des fils, des filaments et/ou de la limaille, disposés régulièrement et/ou irrégulièrement les uns par rapport aux autres, lesquels sont connectés les uns aux autres notamment par soudage par résistance, frittage et/ou brasage.

6. Séparateur de particules (1) selon l'une quelconque des revendications précédentes, dans lequel des moyens de déplacement sont prévus, lesquels déplacent vers l'extérieur les particules retenues centralement, la surface du côté du dépôt de la couche métallique étant notamment réalisée sous forme rugueuse de telle sorte que les particules retenues soient broyées lors d'un déplacement relatif forcé.

7. Séparateur de particules (1) selon l'une quelconque des revendications précédentes, dans lequel plusieurs ondulations (9) à la manière de sécantes couvrent la section transversale (25).

8. Séparateur de particules (1) selon l'une quelconque des revendications précédentes, dans lequel l'au moins une ondulation (9) s'étend dans un plan (8) perpendiculairement à l'axe central (7).

9. Séparateur de particules (1) selon l'une quelconque des revendications 1 à 7, dans lequel l'au moins une ondulation (9) s'étend à travers un plan (8) incliné par rapport à l'axe central (7).

10. Séparateur de particules (1) selon l'une quelconque des revendications précédentes, dans lequel l'au moins une ondulation (9) présente une pente d'ondulation (10) qui est inclinée d'au moins 45° par rapport au plan (8).

11. Véhicule automobile (20) présentant au moins un moteur à combustion interne (2) et un système de gaz d'échappement (27), le système de gaz d'échappement (27) étant réalisé avec une conduite de recirculation des gaz d'échappement (26) et au moins un séparateur de particules (1) selon l'une quelconque des revendications précédentes étant disposé dans la conduite de recirculation des gaz d'échappement (26).
